Europäisches Patentamt

European Patent Office

Office européen des brevets

(11) Numéro de publication: **0 203 858**
**A1**

## (12) DEMANDE DE BREVET EUROPEEN

(21) Numéro de dépôt: 86401082.2

(22) Date de dépôt: 22.05.86

(51) Int. Cl.4: **G01K 7/22** , G01K 7/16 , G01K 3/00

(30) Priorité: 24.05.85 FR 8507877

(43) Date de publication de la demande:
03.12.86 Bulletin 86/49

(84) Etats contractants désignés:
DE FR GB IT

(71) Demandeur: JAEGER
2, rue Baudin
F-92303 Levallois-Perret(FR)

(72) Inventeur: Pras, Jean-Claude
10, rue du Hameau de Villaine
F-91300 Massy(FR)

(74) Mandataire: Martin, Jean-Jacques et al
Cabinet REGIMBEAU 26, Avenue Kléber
F-75116 Paris(FR)

(54) Dispositif de mesure de température avec contact d'alerte, en particulier pour véhicules automobiles.

(57) La présente invention concerne un dispositif de mesure de température avec contact d'alerte, en particulier pour véhicules automobiles, du type comprenant dans un bîtier commun allongé (110) en matériau thermiquement conducteur, un élément thermo-résistant (130) pour la mesure de température et un élément bilame (120) formant contact d'alerte. Selon l'invention, l'élément bilame - (120) est fixé sur le fond (113) du boîtier (110) et s'étend suivant la longueur de celui-ci, tandis que l'élément thermo-résistant (130) est juxtaposé latéralement à côté de l'élément bilame (120).

FIG.3

EP 0 203 858 A1

# DISPOSITIF DE MESURE DE TEMPERATURE AVEC CONTACT D'ALERTE, EN PARTICULIER POUR VEHICULES AUTOMOBILES.

La présente invention concerne un dispositif de mesure de température avec contact d'alerte, en particulier pour véhicules automobiles.

Plus précisément, la présente invention concerne un dispositif de mesure de température comprenant, dans un boîtier commun allongé, en matériau thermiquement conducteur, un élément thermo-résistant pour la mesure de température et un élément bilame formant contact d'alerte.

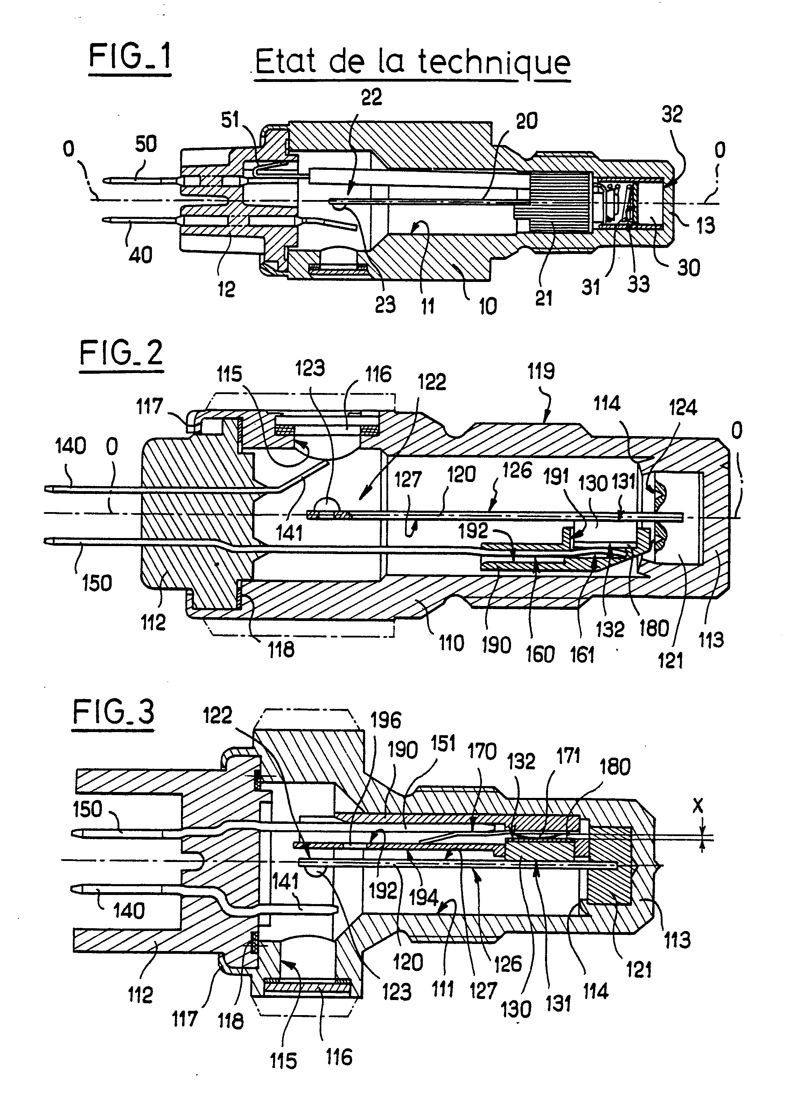

On représenté sur la figure 1 annexée, un dispositif de mesure de température du type précité disponible actuellement sur le marché.

On aperçoit sur cette figure 1, un boîtier 10 réalisé en un matériau thermiquement et électriquement conducteur. Le boîtier 10 définit une chambre interne 11 borgne que loge un élément bilame 20 et un élément thermo-résistant 30. Ce boîtier est généralement utilisé pour assurer le contact électrique avec la masse de l'organe à surveiller, reliée à l'un des pôles de la batterie.

La chambre 11 du boîtier 10 est obturée par un capuchon 12 réalisé en un matériau électriquement isolant, qui sert par ailleurs de support à des lamelles de contact électriquement conductrices 40, 50.

L'élément bilame 20 allongé est disposé selon l'axe de la chambre 11, référencé O-O.

L'élément bilame 20 est fixé dans un support 21 immobilisé dans la chambre 11 du boîtier 10, à proximité du fond 13 de ce dernier.

L'élément bilame 20 est muni au niveau de son extrémité libre 22 d'un grain de contact 23 disposé en regard de l'une 40 des lames de contact supportées par le capuchon 12.

La forme et la position de la lame de contact 40 son déterminées de telle sorte que, en dessous d'un seuil prédéterminé de température, le grain de contact 23 soit éloigné de la lamelle 40, mais que par contre, au-dessus de seuil de température prédéterminé, à la suite de la déformation induite de l'élément bilame 20, le grain de contact 23 soit porté en appui contre la lame 40.

Le corps de l'élément bilame 20 est relié électriquement, par l'intermédiaire du support 21 au boîtier 10.

Ainsi, la détection d'alarme est opérée entre la lame de contact 40 et le boîtier 10.

La détection d'un court-circuit entre la lame de contact 40 et le boîtier 10 indique une température supérieure à la température prédéterminée de seuil.

L'élément thermo-résistant 30 est disposé dans l'axe de la chambre 11 du boîtier 10, entre le fond 13 de ce dernier de le support 21.

Plus précisément, l'élément thermo-résistant 30 est sollicité en appui contre le fond 13 du boîtier par un organe élastique 31 électriquement conducteur.

Les deux bornes de l'élément thermo-résistant 30, formé de préférence d'une thermistance, sont formées de ses faces opposées 32, 33 reliées respectivement, sur le plan électrique, au fond 13 du boîtier 10 et à l'organe de sollicitation 31.

Ce dernier est par ailleurs connecté à une liaison électrique 51 menant à la lame de contact 50.

Ainsi, sur le plan électrique, l'élément thermo-résistant 30 est intercalé entre la lame de contact 50 et le boîtier 10.

La mesure de la résistance entre ces deux organes est directement représentative de la température.

L'utilisation du dispositif de mesure de température avec contact d'alerte illustré sur la figure 1 a rendu de grands services, notamment dan le domaine de véhicules automobiles.

Néanmoins, la présente invention a pour but de perfectionner ce dispositif, en particulier en améliorant sa sensibilité, et en simplifiant sa structure.

Pour ce fair, selon la présente invention, il est proposé un dispositif de mesure de température avec contact d'alerte du type comprenant dans un boîtier commun allongé en matériau thermiquement conducteur, un élément thermo-résistant pour la mesure de température, et un élément bilame formant contact d'alerte, dans lequel l'élément bilame est fixé sur le fond du boîtier et s'étend suivant la longueur du boîtier, tandis que l'élément thermo-résistant est juxtaposé latéralement à côté de l'élément bilame.

La disposition précitée conforme à la présente invention de l'élément thermo-résistant, en position juxtaposé latéralement à côté de l'élément bilame, permet à encombrement égal du boîtier 10, d'utiliser un élément bilame de longueur supérieure, par rapport au dispositif de mesure antérieur illustré sur la figure 1.

Cette disposition permet par conséquent, de façon simple, d'améliorer la sensibilité du dispositif.

Par ailleurs, grâce à la nouvelle structure du dispositif de mesure de température avec contact d'alerte, proposé selon l'invention, les liaisons électriques internes au boîtier sont plus faciles à établir, et lorsqu'il est souhaitable d'isoler sur le plan électrique l'élément thermo-résistant et le boîtier, cette isolation électrique est également plus facile à remplir.

De préférence, selon l'invention, l'élément thermo-résistant est sollicité en appui contre une face latérale de l'élément bilame par une lame élastique électriquement conductrice.

Il est actuellement considéré comme avantageux qu'une pastille électriquement conductrice soit insérée entre l'élément thermo-résistant et la lame élastique électriquement conductrice, en contact étroit avec une face de l'élément thermo-résistant pour assurer l'équipotentialité de celle-ci.

La lame élastique électriquement conductrice sollicitant l'élément thermo-résistant contre l'élément bilame peut faire l'objet de différents modes de réalisation.

Selon l'un de ces modes de réalisation, la lame élastique électriquement conductrice est accessible à l'extérieur du boîtier.

Selon un autre mode de réalisation, la lame élastique électriquement conductrice est logée dans le boîtier et reliée électriquement à une lame de contact accessible à l'extérieur de celui-ci.

Selon une caractéristique avantageuse de la présente invention, la lame élastique électriquement conductrice repose contre l'élément thermo-résistant par l'intermédiaire d'une incurvation réalisée dans la lame élastique.

Cette incurvation peut être formée d'une pluralité de languettes découpées dans la lame et pliées sous forme d'une enveloppe sphérique.

Selon une première variante de réalisation, l'élément thermo-résistant est relié électriquement à l'élément bilame.

Selon une seconde variante de réalisation, un élément électriquement isolant est intercalé entre l'élément thermo-résistant et l'élément bilame.

Selon une autre caractéristique avantageuse de la présente invention, l'élément bilame est fixé sur un support immobilisé par sertissage contre le fond du boîtier.

Selon l'invention, l'élément thermo-résistant est de préférence disposé dans un support en matériau électriquement isolant logé dans le boîtier et possédant une enveloppe sensiblement complémentaire de l'espace défini dans le boîtier à côté de l'élément bilame.

D'autres caractéristiques et avantages de la présente invention apparaîtront à la lecture de la description détaillée qui va suivre et en regard de dessins annexés donnés à titre d'exemples non limitatifs et sur lesquels:

-la figure 1 représentant l'état de la technique ayant déjà été décrite,

-la figure 2 représente une vue en coupe axiale longitudinale d'un dispositif de mesure de température conforme à une premier mode de réalisation de la présente invention,

-la figure 3 représente une vue en coupe axiale longitudinale d'un dispositif de mesure de température conforme à un second mode de réalisation de la présente invention,

-la figure 4 représente une vue en plan du support de thermistance pour le second mode de réalisation du dispositif de mesure conforme à la présente invention,

-la figure 5 représente une vue en coupe longitudinale du même support de thermistance selon un plan de coupe référencé V-V sur la figure 4,

-la figure 6 représente une vue en bout du même support de thermistance selon une vue illustrée par la flèche VI sur la figure 4,

-les figures 7 et 8 représentent deux vues latérales orthogonales d'une lame élastique de contact pour le second mode de réalisation du dispositif de mesure conforme à la présente invention,

-la figure 9 représente, en coupe axiale longitudinale, une variante du second mode de réalisation du dispositif de mesure conforme à la présente invention, dans laquelle la thermistance est isolée électriquement de l'élément-bilame,

-la figure 10 représente une vue en plan d'un élément électriquement isolant intercalé entre l'élément thermo-résistant et l'élément bilame dans la variante illustrée sur la figure 9,

-la figure 11 représente le chapeau, et les lames de contact associées à celui-ci, de la variante de réalisation illustrée sur la figure 9,

-la figure 12 représente une vue en plan d'un ressort de contact coopérant avec l'élément électriquement isolant illustré sur la figure 10,

-la figure 13 représente une vue en coupe du même ressort de contact selon un plan de coupe référencé XIII-XIII sur la figure 12,

-la figure 14 illustre un détail de réalisation du même ressort de contact selon une vue illustrée par la flèche référencée XIV sur la figure 13.

Pour l'essentiel, le dispositif de mesure de température avec contact d'alerte, conforme à la présente invention comprend un boîtier 110 réalisé en un matériau électriquement et thermiquement conducteur, que possède une chambre interne borgne généralement cylindrique 111, d'axe O-O, qui loge un élément-bilame 120 et un élément thermo-résistant 130.

La chambre interne 111 est obturée par un chapeau 112 réalisé en un matériau électriquement isolant qui sert par ailleurs de support à des lames de contact 140, 150.

Comme cela est illustré sur les figures, l'élément bilame s'étend suivant la longueur de la chambre 111, sensiblement dans l'axe O-O de celle-ci.

L'élément bilame 120 est fixé sur un support 121, électriquement conducteur, de préférence par sertissage comme cela est illustré en 124 sur la figure 2.

Ce support 121 est lui-même immobilisé par sertissage comme cela est illustré en 114 sur les figures 2 et 3 contre le fond 113 du boîtier 110.

L'extrémité libre 122 de l'élément bilame 120 porte un grain de contact 123 en regard d'une lame de contact 140 supportée par le chapeau isolant 112 et accessible à l'extérieur de celui-ci.

L'extrémité 141 de la lame de contact en saillie à l'intérieur de la chambre 111 est conformée de telle sorte que pour une température inférieure à une température de seuil prédéterminée, le grain de contact 123 de l'élément bilame 120 soit éloigné de la lame de contact 140, mais que par contre pour une température de seuil prédéterminée, et au-dessus de celle-ci à la suite de la déformation de l'élément bilame 120, le grain de contact 123 soit porté en appui contre la lame de contact 140, pour relier électriquement celle-ci, par l'intermédiaire du grain de contact 123, l'élément formant bilame 120 et le support 121, au boîtier 110.

Pour facilitier le réglage, par pliage, de la position de l'extrémité 141 de la lame de contact 140 par rapport au grain 123, le boîtier 110 est muni en regard de l'extrémité 141 précitée d'une fenêtre 115.

Cette fenêtre 115 permet d'accéder de l'extérieur, et après assemblage du chapeau 112 support de lame sur le boîtier 110, à l'extrémité 141 de la lame contact interne au logement 111 pour plier celle-ci de façon appropriée.

La fenêtre 115 est obturée après un tel réglage, par une pastille 116 immobilisée sur le boîtier 110 par sertissage.

On remarquera à l'examen des figures que le chapeau 112 support de lame est immobilisé sur le boîtier 110, par sertissage en 117, avec interposition d'un joint 118.

Comme cela a été précédemment évoqué, et comme cela apparaît à l'examen des figures, en particulier des figures 2, 3 et 9, selon la présente invention, l'élément thermo-résistant 130 - (thermistance) est juxtaposé latéralement, à côté de l'élément bilame 120 dans la chambre 111.

L'élément thermo-résistant 130 possède de préférence la forme d'une pastille cylindrique de révolution autour d'un axe s'étendant perpendiculairement aux faces latérales 126, 127 de l'élément bilame 120 et perpendiculairement à l'axe O-O de la chambre 111.

L'élément thermo-résistant 130 présente deux surfaces de base planes et circulaires 131, 132 formant les bornes respectives de l'élément thermo-résistant 130.

Comme cela apparaît à l'examen des figures annexées, une lame élastique électriquement conductrice (référencée 160 sur la figure 2 et 170 sur la figure 3) sollicite l'élément thermo-résistant 130 vers L'élément bilame 120.

Selon les variantes de réalisation illustrées sur les figures 2 et 3, l'élément thermo-résistant 130 repose par sa surface de base 131 contre la face latérale 127 de l'élément-bilame 120.

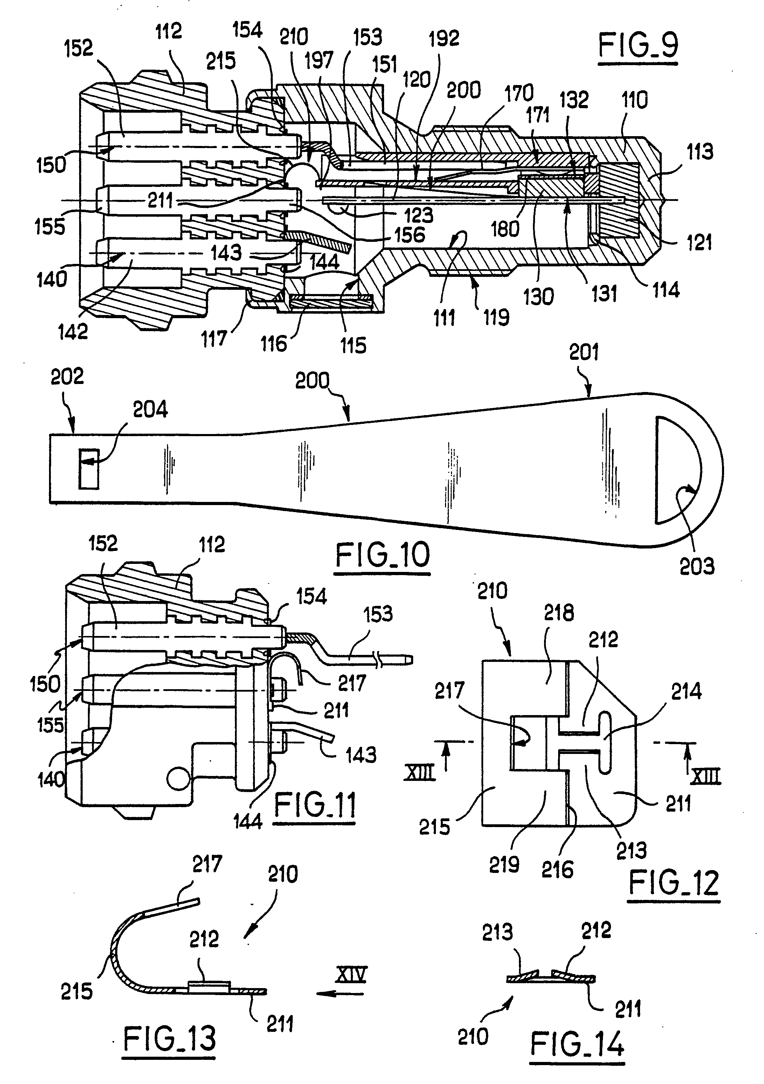

Par contre, selon la variante de réalisation illustrée sur la figure 9, un élément électriquement isolant 200 est intercalé entre la surface de base 131 de l'élément thermo-résistant et la surface latérale 127 de l'élément bilame 120.

Par ailleurs, une pastille circulaire plane 180 en matériau électriquement conducteur repose contre la seconde surface de base 132 de l'élément thermo-résistant 130, pour assurer l'équipotentialité sur cette seconde face 132 de l'élément thermo-résistant 130.

La lame élastique électriquement conductrice 160, 170 précitée sollicitant l'élément thermo-résistant 130 vers l'élément-bilame 120 repose contre la pastille 180 par l'intermédiaire d'une incurvation 161, 171. La hauteur de l'incurvation, référencée X sur la figure 3, est légèrement supérieure aux variations maximales d'épaisseur de l'élément thermo-résistant 130.

Selon le mode de réalisation illustré sur la figure 2, la lame élastique électriquement conductrice 160 sollicitant l'élément thermo-résistant contre l'élément bilame 120 est solidaire de la lame de contact 150 suportée par le champeau électriquement isolant 112 et accessible à l'extérieur du boîtier 110.

Par contre, selon la variante de réalisation illustrée sur les figures 3 et 9, la lame de contact 150 et la lame de sollicitation élastique 170 sont formées de deux éléments séparés en appui réciproque pour établir une liaison électrique entre la lame de contact 150 et la lame de sollicitation 170.

Le support 190 de l'élément thermo-résistant 130 est réalisé en matériau électriquement isolant.

Pour l'essentiel, ce support 190 possède une chambre borgne 191 complémentaire de l'enveloppe de la pastille thermo-résistante 130 et un canal longitudinal 192 débouchant d'un côté dans la chambre 191 précitée et ouvert de l'autre côté vers le chapeau 112.

Plus précisément, selon un mode de réalisation considéré actuellement comme préférentiel, la chambre 191 est une chambre cylindrique dont la surface de base circulaire déterminant le fond de la chambre 191 est référencée 193 sur les figures. De plus, le canal 191 s'étend parallèlement à la surface de base 193 de la chambre 191.

La section droite du support électriquement isolant 190, considerée transversalement au canal 192 est complémentaire de l'espace défini dans la chambre 111 à côté de l'élément formant bilame 120.

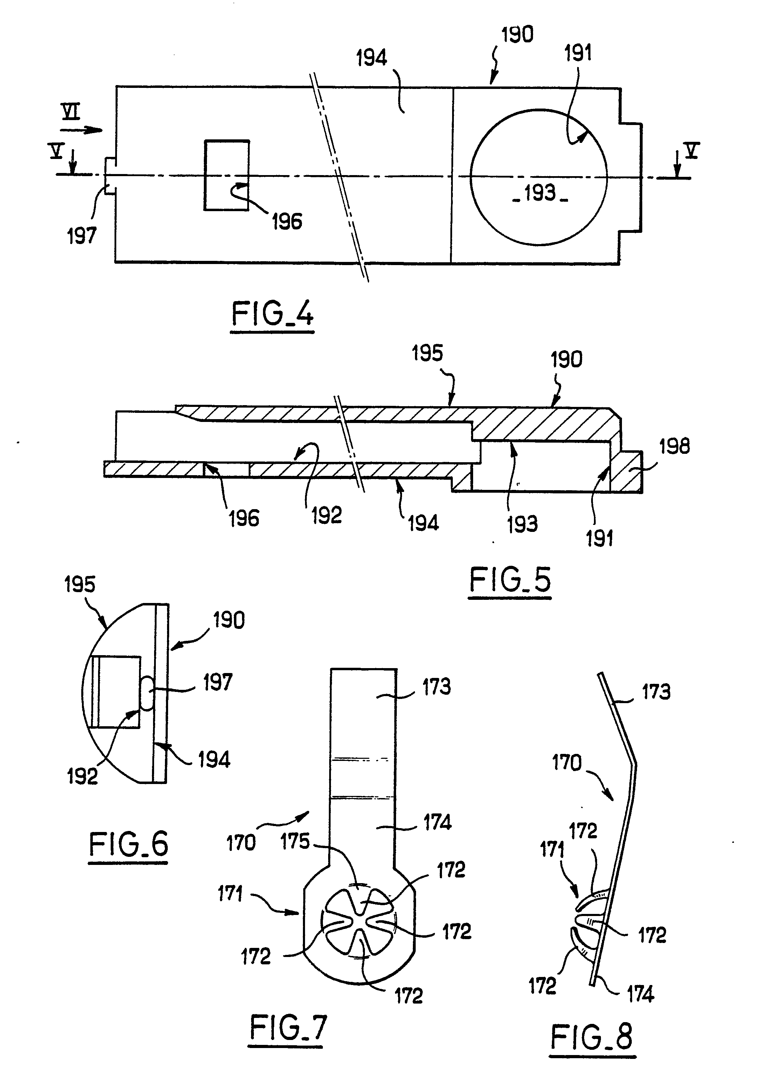

Pour ce faire, comme cela apparaît sur les figures 4, 5 et 6 annexées, la chambre 191 recevant l'élément thermo-résistant 130 débouche sur une surface plane étagée 194 du support électriquement isolant 190, tandis que la surface 195 opposée de celui-ci est formée d'un secteur de cylindre complémentaire de la chambre interne 111 du boîtier.

Le canal 192 est adapté pour recevoir la lame élastique de sollicitation 160, 170, ainsi que l'extrémité 151 de la lame de contact 150 selon le mode de réalisation illustré sur la figure 3.

Le support 190 de l'élément thermo-résistant 130 posède au niveau de son extrémité adjacente au fond du boîtier, et à proximité de la surface étagée 194, d'un téton 198 en saillie vers le fond du boîtier et par exemple de section droite généralement semi-circulaire.

La lame de sollicitation élastique 170 utilisée selon le mode de réalisation représenté sur la figure 3 est illustrée en détail sur les figures 7 et 8.

Cette lame 170 présente deux ailes planes 173, 174 inclinées relativement.

L'une des ailes 174 est munie de l'incurvation 171 par l'intermédiaire de laquelle la lame 170 repose contre la pastille 180.

Plus précisément, selon le mode de réalisation représenté sur les figures 7 et 8, l'incurvation 171 est formée d'une pluralité de languettes 172 découpées dans la lame 170 et pliées sous forme d'une enveloppe sphérique.

Comme cela apparaît sur les figures 7 et 8, l'incurvation 171 peut par exemple être réalisée sous forme de quatre languettes 172 raccordées à l'aile 174, sensiblement selon un cercle référencé 175, pliées sous forme d'une enveloppe sphérique et convergent vers le sommet de celle-ci.

Selon les modes de réalisation illustrés sur les figures 2 et 3, l'élément thermo-résistant 130 repose par l'intermédiaire de l'une de ses surfaces de base 131 contre l'élément bilame 120.

Dans ce cas, la mesure de température est opérée par mesure de la résistance entre la lame de contact 150 et le boîtier 110, tandis que la détection d'alerte est réalisée par détection d'un court-circuit entre la lame de contact 140 et le boîtier 110.

Selon la variante de réalisation illustrée sur la figure 9, l'élément thermo-résistant 130 est isolé électriquement de l'élément bilame 120.

Pour cela, un élément électriquement isolant 200 précédemment évoqué est intercalé entre l'élément thermo-résistant 130 et l'élément bilame 120.

Dans un tel cas, le chapeau 112 électriquement isolant fermant la chambre 111 du boîtier supporte une troisième lame de contact 155 reliée électriquement à la surface de base 131 de l'élément thermo-résistant 130.

Ainsi, selon le mode de réalisation illustré sur la figure 9, la mesure de température est opérée par mesure de la résistance entre les lames de contact 150 et 155.

L'élément 200 intercalé entre l'élément thermo-résistant 130 et l'élément bilame 120 est formé d'une bande souple de matériau électriquement isolant revêtue sur une face d'une couche de matériau électriquement conducteur.

A L'utilisation, la bande de matériau électriquement isolant repose contre l'élément bilame 120 en regard de l'élément thermo-résistant 130, la couche de matériau électriquement conducteur de l'élément 200 étant dirigée vers l'élément thermo-résistant 130.

Selon la représentation illustrée sur la figure 10, l'élément 200 est formé d'une bande effilée d'une première extrémité 201 adjacente au fond de la chambre 111 vers sa seconde extrémité 202 adjacente à l'ouverture de cette dernière.

Comme illustré sur la figure 10, au niveau de l'extrémité 201 la bande 200 est munie d'une découpe 203 complémentaire de la section droite du téton 198 et destinée à être engagée afin d'éviter le retrait de la bande 200 vers l'ouverture de la chambre 111.

Au niveau de cette extrémité 201 et sur la majeure partie de sa longueur, la bande 200 est disposée sur l'extérieur de support électriquement isolant 190, entre ce dernier et l'élément bilame 120.

Par contre, l'extrémité 202 de plus faible largeur de la bande 200 est introduite dans le canal 192 par une fenêtre rectangulaire référencée 195 réalisée dans le support électriquement isolant 190 et reliant le can 192 à la face avant 194 précitée du support.

La bande 200 est de plus munie au niveau de l'extrémité 202 précitée d'une ouverture 204, par exemple rectangulaire, généralement complémentaire de la section droite d'un téton 197 prévu sur le support électriquement isolant 190, au niveau de l'ouverture du canal 192 (soit à l'opposé de la chambre 191), au voisinage de la face avant 194 du support électriquement isolant 190.

Pour cela, comme cela est illustré sur la figure 9, en aval de la découpe 204, la bande 200 repose contre la surface interne du canal 192 et l'extrémité 202 de la bande 200 est repliée au niveau de l'ouverture du canal 192 vers la face avant 194.

La bande 200 est maintenue dans cette position et la couche électriquement conductrice prévue sur celle-ci est reliée électriquement à la lame de contact 155 par l'intermédiaire d'un ressort de contact 210 illustré sur les figures 12, 13 et 14.

Ce ressort de contact 210 est réalisé en un matériau électriquement conducteur.

Pour l'essentiel, ce ressort de contact 210 est f+rmé d'une embase 211 généralement plane, engagée avec la lame de contact 155, et une aile 215 incurvée reposant contre la couche électriquement conductrice de la bande 200 et engagée sur le téton 197.

Comme cela apparaît sur les figures 12, 13 et 14, l'embase 211 est munie par découpage d'une ouverture 214 en H, de deux ailettes convergentes 212, 213 formant pince élastique et entre lesquelles est engagée l'extrémité 156 de la lame de contact 155 interne à la chambre 111.

L'aile incurvée 215 est munie au niveau de son bord libre 216 d'une découpe médiane rectangulaire 217. La longueur de cette découpe 217, considérée parallèlement au bord libre 216 est égale à la largeur du téton 197.

Ainsi à l'utilisation, les deux dentelures 218 et 219 délimitées respectivement de part et d'autre de la découpe 217 engagée sur le téton 197 reposent contre la couche électriquement conductrice de la bande 200.

Selon un mode de réalisation ayant donné satisfaction et indiqué à titre d'exemple non limitatif, la bande 200 est formée en un matériau électriquement isolant commercialisé sous la dénomination Kapton d'une épaisseur de 0,05mm revêtu sur une face d'une couche de cuivre électriquement conductrice d'une épaisseur de 0,035 mm.

Comme cela apparaît à l'examen de la figure 9, les lames de contact 140, 150 peuvent être formées chacune d'une fiche de connexion, 142, 152 sur lesquelles est surmoulé le chapeau 112 et d'une lamelle 143, 153 reliée à une embase à pince 144, 154 engagée sur l'extrémité interne des fiches 142, 152 et similaire à l'embase 211 illustrée sur la figure 12.

De préférence, le boîtier 110 est muni sur une portion de sa surface externe référencée 119 d'un filetage permettant de façon classique en soi la fixation du dispositif de mesure de température sur un carter.

On remarquera que la lame 151 assure d'une part un contact électrique avec la lame 170, d'autre part lors de l'assemblage, exerce une sollicitation axiale sur cette lame 170, dirigée vers le fond du boîtier, destinée à positionner l'élément thermo-résistant 130 tout près de l'encastrement du bilame sur le support 121, dans le but de maintenir un bon contact thermique malgré la déformation du bilame en température.

**Revendications**

1. Dispositif de mesure de température avec contact d'alerte, en particulier pour véhicules automobiles, du type comprenant dans un boîtier commun allongé (110) en matériau thermiquement conducteur, une élément thermo-résistant (130) pour le mesure de température, et un élément bilame - (120) formant contact d'alerte, caractérisé par le fait que l'élément bilame (120) est fixé sur le fond du boîtier (110), tandis que l'élément thermo-résistant (130) est juxtaposé latéralementà côté de l'élément bilame (120).

2. Dispositif de mesure de température avec contact d'alerte selon la revendication 1, caractérisé par le fait que l'élément thermo-résistant (130) est sollicité en appui contre une face latérale de l'élément bilame (120) par une lame élastique (160, 170) électriquement conductrice.

3. Dispositif de mesure de température avec contact d'alerte, selon la revendication 2, caractérisé par le fait qu'une pastille électriquement conductrice (180) est insérée entre l'élément thermo-résistant (130) et la lame élastique électriquement conductrice (160, 170), en contact étroit avec une face de l'élément thermo-résistant, pour assurer l'équipotentialité de celle-ci.

4. Dispositif de mesure de température avec contact d'alerte selon l'une des revendications 2 ou 3, caractérisé par le fait que la lame élastique électriquement conductrice (160) sollicitant l'élément thermo-résistant (130) contre l'élément bilame (120) est accessible à l'extérieur du boîtier - (110).

5. Dispositif de mesure de température avec contact d'alerte selon l'une revendications 2 ou 3, caractérisé par le fait que la lame élastique électriquement conductrice (170) sollicitant l'élément thermo-résistant (130) contre l'élément bilame (120) est logée dans le boîtier (110) et reliée électriquement à une lame de contact (150) accessible à l'extérieur du boîtier.

6. Dispositif de mesure de température avec·contact d'alerte selon l'une des revendications 2 à 5, caractérisé par le fait que la lame élastique électriquement conductrice (160, 170) repost contre l'élément thermo-résistant (130) par l'intermédiaire d'une incurvation (161, 171) réalisée dans la lame élastique (160, 170).

7. Dispositif de mesure de température avec contact d'alerte selon la revendication 6, caractérisé par le fait que l'incurvation (171) réalisée dans la lame élastique et par la'intermédiaire de laquelle celle-ci repose contre l'élément thermo-résistant - (130) est formée d'une pluralité de languettes - (172) découpées dans la lame et pliées sous forme d'une enveloppe sphérique.

8. Dispositif de mesure de température avec contact d'alerte selon l'une des revendications 1 à 7, caractérisé par le fait que l'élément thermo-résistant (130) est reliée électriquement à l'élément bilame (120).

9. Dispositif de mesure de température avec contact d'alerte selon l'une des revendications 1 à 7, caractérisé par le fait que un élément électriquement isolant (200) est intercalé entre l'élément thermo-résistant (130) et l'élément bilame (120).

10. Dispositif de mesure de température avec contact d'alerte selon l'une des revendications 1 à 9, caractérisé par le fait que l'élément bilame (120) est fixé sur un support (121) immobilisé par sertissage contre le fond (113) du boîtier.

11. Dispositif de mesure de température avec contact d'alerte selon l'une des revendications 1 à 10, caractérisé par le fait que l'élément thermo-résistant (130) est disposé dans un support (190) en matériau électriquement isolant logé dans le boîtier (110) et possédant une enveloppe sensiblement complémentaire de l'espace défini dans le boîtier à côté de l'élément bilame (120).

12. Dispositif de mesure de température avec contact d'alerte selon la revendication 11, caractérisé par le fait que le support (190) de l'élément thermo-résistant (130) possède une chambre borgne (191) complémentaire de l'enveloppe de l'élément thermo-résistant (130) et un canal longitudinal (192) débouchant dans la chambre (191).

13. Dispositif de mesure de température avec contact d'alerte selon la revendication 9, caractérisé par le fait que l'élément électriquement isolant intercalé entre l'élément thermo-résistant (130) et l'élément bilame (120) est composé d'une bande de matériau électriquement isolant revêtue sur une face d'une couche de matériau électriquement conducteur.

14. Dispositif de mesure de température avec contact d'alerte selon la revendication 13 prise en combinaison avec l'une des revendications 11 et 12, caractérisé par le fait que l'élément électriquement isolant (200) intercalé entre l'élément thermo-résistant (130) et l'élément bilame (120) est engagé dans le support (190) de l'élément thermo-résistant (130) et maintenu en position par ressort de contact, électriquement conducteur et incurvé (210).

**FIG_1** Etat de la technique

**FIG_2**

**FIG_3**

FIG_4

FIG_5

FIG_6

FIG_7

FIG_8

FIG_9

FIG_10

FIG_11

FIG_12

FIG_13

FIG_14

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PATENTS ABSTRACTS OF JAPAN, vol. 5, no. 175, 11 novembre 1981, page 35 P 88; & JP - A - 56 103 372 (HITACHI SEISAKUSHO K.K.) 18-08-1981 | 1,8 | G 01 K 7/22<br>G 01 K 7/16<br>G 01 K 3/00 |
| | --- | | |
| A | US-A-3 295 373 (L. BODDY)<br>* Figures 1-4; colonne 3, lignes 9-75; colonne 4, lignes 1-28; colonne 5, ligne 68 - colonne 6, ligne 59 * | 2,3 | |
| | --- | | |
| A | DE-A-3 119 681 (BERU-WERKE ALBERT RUPRECHT)<br>* Figure 4; page 6, ligne 24 - page 7, ligne 10 * | 1 | |
| | ----- | | |

| | | DOMAINES TECHNIQUES RECHERCHES (Int. Cl.4) |
|---|---|---|
| | | G 01 K |

Le présent rapport de recherche a été établi pour toutes les revendications

| Lieu de la recherche | Date d'achèvement de la recherche | Examinateur |
|---|---|---|
| LA HAYE | 04-09-1986 | VISSER F.P.C. |